# EUROPEAN PATENT APPLICATION

(11) **EP 4 102 276 A1**
(43) Date of publication of application: **14.12.2022**
(21) Application number: 21750535.3
(22) Date of filing: 22.01.2021
(51) Int. Cl.: G02B 6/44

(54) **OPTICAL FIBER CABLE AND MANUFACTURING METHOD FOR OPTICAL FIBER CABLE**

(30) Priority: 06.02.2020 JP 2020018981
(71) Applicant: Fujikura Ltd., Tokyo 135-8512 (JP)
(72) Inventor: TSUJIMOTO Yusuke, Sakura-shi, Chiba 285-8550 (JP); OSATO Ken, Sakura-shi, Chiba 285-8550 (JP); NAMAZUE Akira, Sakura-shi, Chiba 285-8550 (JP)
(74) Representative: Plasseraud IP
(86) International application number: PCT/JP2021/002307
(87) International publication number: WO 2021/157394

(57) **Abstract**

An optical fiber cable includes a core including a plurality of optical fibers, a sheath housing the core, and an interposition layer including fibers arranged between the core and the sheath, in which the fibers which are arranged from an outer end portion to an intermediate portion in a radial direction of the interposition layer are integrated by a matrix.

## Description

### TECHNICAL FIELD

The present invention relates to an optical fiber cable and a method of manufacturing an optical fiber cable.

The present application claims priority based on Japanese Patent Application No. 2020-018981 filed in Japan on February 6, 2020, the contents of which are incorporated herein by reference.

### BACKGROUND ART

Patent Document 1 discloses an optical fiber cable including a core having a plurality of optical fibers, a buffer layer covering the core, a sheath covering the buffer layer, and a tension member embedded in the sheath. According to the present configuration, the optical fiber can be protected from an external force by the buffer layer.

### PRIOR ART

### PATENT DOCUMENT

[Patent Document 1]
Japanese Unexamined Patent Application, First Publication No. 2013-228647

### DISCLOSURE OF INVENTION

### PROBLEMS TO BE SOLVED BY THE INVENTION

In the optical fiber cable of Patent Document 1, since the tension member is embedded in the sheath, the thickness of the sheath increases. Therefore, it is difficult to suppress an increase in the diameter of the optical fiber cable.

The present invention has been made in consideration of the above circumstances, and provides an optical fiber cable capable of protecting an optical fiber from an external force and suppressing an increase in the diameter of the optical fiber cable.

### MEANS FOR SOLVING THE PROBLEMS

In order to solve the objects described above, an optical fiber cable according to the first aspect of the present application includes a core including a plurality of optical fibers, a sheath housing the core, and an interposition layer including fibers arranged between the core and the sheath, in which the fibers which are arranged from an outer end portion to an intermediate portion in a radial direction of the interposition layer are integrated by a matrix.

A method of manufacturing an optical fiber cable according to the second aspect of the present application includes forming an interposition layer comprising fibers around a core comprising a plurality of optical fibers, applying a matrix before curing to an outer peripheral portion of the interposition layer, curing the matrix, and forming a sheath covering the interposition layer.

### EFFECTS OF THE INVENTION

According to the above-described aspects of the present invention, it is possible to provide an optical fiber cable capable of protecting the optical fiber from an external force and suppressing an increase in the diameter of the optical fiber cable.

### BRIEF DESCRIPTIONS OF DRAWINGS

FIG. 1 is a cross-sectional view of an optical fiber cable according to the present embodiment.
FIG. 2 is an enlarged view of a portion II of FIG. 1.
FIG. 3 is a cross-sectional view of an optical fiber cable according to a comparative example.
FIG. 4 is a drawing describing the experimental results.
FIG. 5 is a cross-sectional view of the optical fiber cable according to a modification example of the present embodiment.

### BEST MODE FOR CARRYING OUT THE INVENTION

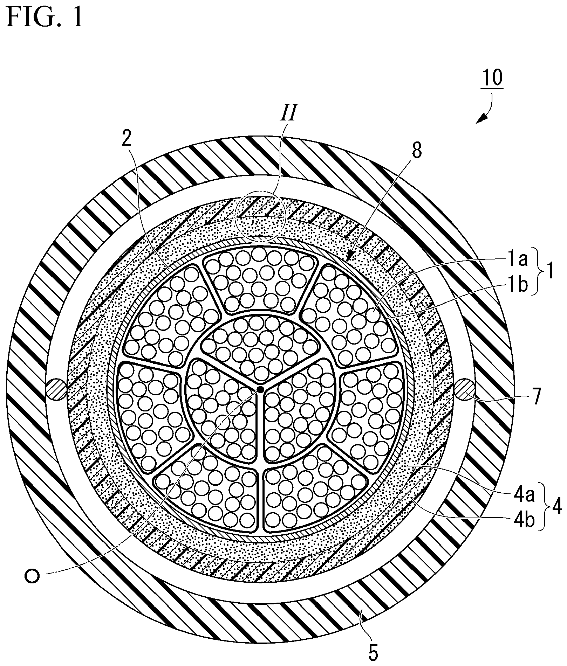

As shown in FIG. 1, an optical fiber cable 10 of the present embodiment includes a core 8 having a plurality of optical fibers 1a, an interposition layer 4, a sheath 5 provided outside the interposition layer 4, and a pair of ripcords 7 provided between the interposition layer 4 and the sheath 5.

In the present embodiment, a central axis of the sheath 5 is referred to as a central axis O, the direction along the central axis O is referred to as a longitudinal direction, and a section orthogonal to the longitudinal direction is referred to as the cross section. In addition, in the cross-sectional view, the direction that intersects the central axis O is referred to as a radial direction, and the direction that orbits around the central axis O is referred to as a circumferential direction.

The core 8 includes a plurality of optical fiber units 1 having each of the plurality of optical fibers 1a, and a wrapping tube 2 wrapping these optical fiber units 1. The plurality of optical fiber units 1 are wrapped by the wrapping tube 2 in a state of being twisted in an SZ shape or a spiral shape. The core 8 may be configured by wrapping one optical fiber unit 1 with a wrapping tube 2.

As the wrapping tube 2, a non-woven fabric, polyester tape, or the like can be used. In addition, as the wrapping tube 2, a water-absorbing tape obtained by imparting water absorption characteristic to a non-woven fabric, a polyester tape, or the like may be used. In such a case, the waterproof performance of the optical fiber cable 10 can be enhanced. The core 8 may not be provided with the wrapping tube 2, and the optical fiber unit 1 may be in contact with the interposition layer 4. In other words, the interposition layer 4 may be used as the wrapping tube 2. However, when the wrapping tube 2 is provided, the optical fiber unit 1 is prevented from being separated during manufacturing, so that the interposition layer 4 can be more easily provided around the core 8.

The optical fiber unit 1 of the present embodiment includes a plurality of optical fibers 1a and a bundling material 1b bundling these optical fibers 1a. As the optical fiber 1a, an optical fiber core wire, an optical fiber element wire, an optical fiber ribbon, or the like can be used. As one kind of an optical fiber ribbon, the plurality of optical fibers 1a may form a so-called intermittently-fixed optical fiber ribbon. In the intermittently-fixed optical fiber ribbon, the plurality of optical fibers 1a are adhered to each other so as to spread in a mesh shape (spider web shape) when pulled in a direction orthogonal to the extending direction thereof. In particular, one optical fiber 1a is adhered to the both sides of optical fibers 1a at different positions respectively in the longitudinal direction, and adjacent optical fibers 1a are adhered to each other so as to be spaced apart from each other in the longitudinal direction.

The aspect of the optical fiber 1a included in the core 8 is not limited to the intermittently-fixed optical fiber ribbon, and may be appropriately changed.

The binding material 1b may be in the shape of a string, a sheet, or a tube. In addition, the plurality of optical fibers 1a may be wrapped by the wrapping tube 2 in an unbundled state (that is, without forming the optical fiber unit 1).

Alternatively, a plurality of optical fibers 1a may be bundled by being twisted together to form an optical fiber unit 1. In such a case, the optical fiber unit 1 may not include the binding material 1b.

Although the cross-sectional shape of the optical fiber unit 1 is shown as a circle in FIG. 1 and the like, the cross-sectional shape may be distorted from the circular shape due to the movement of the optical fiber 1a in the optical fiber unit 1. In addition, in FIG. 1 and the like, three optical fiber units 1 form an inner layer, and seven optical fiber units 1 form an outer layer. However, a portion of the outer layer may enter the inner layer. Alternatively, the optical fiber unit 1 may not form these layers.

In addition, in FIG. 1 and the like, a plurality of optical fiber units 1 are arranged with a uniform gap; however, the gap may be eliminated or the gap may be non-uniform. Alternatively, inclusions may be inserted between the optical fiber units 1 to adjust the mounting density of the optical fiber 1a on the core 8 while making the shape of the core 8 closer to a circle.

The ripcord 7 is a thread of synthetic fiber such as polyester, and is used for tearing the sheath 5. In addition, as the ripcord 7, a columnar rod made of polypropylene (PP) or nylon may be used. The pair of ripcords 7 are arranged so as to sandwich the core 8 in the radial direction. The number of ripcords 7 embedded in the sheath 5 may be one, or three or more.

The sheath 5 covers the core 8, the interposition layer 4, and the ripcord 7. As the material of the sheath 5, a polyolefin (PO) such as polyethylene (PE), polypropylene (PP), ethylene ethyl acrylate copolymer (EEA), ethylene vinyl acetate copolymer (EVA), and ethylene propylene copolymer (EP) resin, polyvinyl chloride (PVC), and the like can be used. In addition, a mixed material of the above-described resins (alloy or mixture) may be used.

A mark indicating the position of the ripcord 7 may be provided on the outer peripheral surface of the sheath 5. The marking may be a marking with paint, a protrusion protruding radially outward, or a groove recessed radially inward. These markings may extend along the longitudinal direction.

The material forming the sheath 5 may include capsaicin or the like. In this case, it is possible to prevent an animal such as a mouse from biting the sheath 5.

The interposition layer 4 is located between the core 8 and the sheath 5, and is formed in a cylindrical shape covering the core 8. The interposition layer 4 has an inner peripheral portion 4a and an outer peripheral portion 4b. The inner peripheral portion 4a is in contact with the core 8 (pressing winding 2), and the outer peripheral portion 4b faces the sheath 5. A space is provided between the outer peripheral portion 4b and the sheath 5, and the ripcord 7 is arranged in the space.

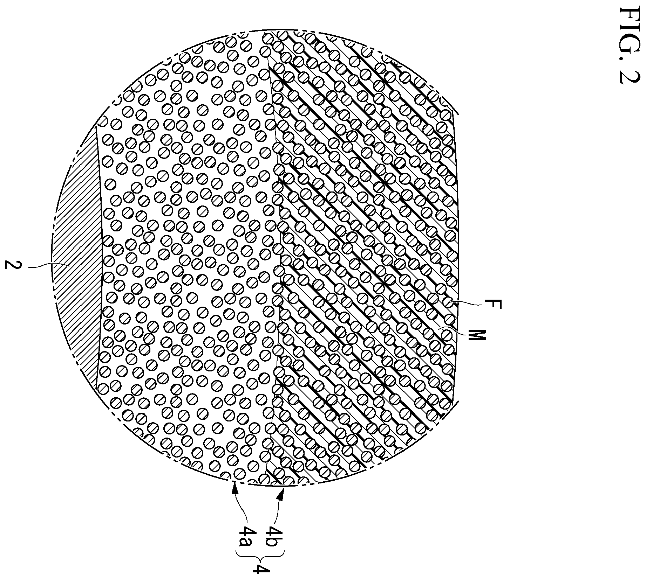

As shown in FIG. 2, the interposition layer 4 includes the fiber F. The interposition layer 4 may be a woven fabric, a non-woven fabric, or a felt. The "woven fabric" is a sheet formed by weaving fibers F. The "non-woven fabric" is a sheet formed by mechanically, chemically, or thermally treating the fibers F and joining the fibers F to each other by the adhesive force and the fusion force of the fibers F themselves. The "felt" is a sheet formed by crimping fibers F by applying moisture, heat, pressure, or the like. Non-woven fabrics and felts can reduce production costs more than woven fabrics. In addition, in the non-woven fabric and felt, it is possible to eliminate the directionality in strength and expansion/contraction by orienting the fibers F at random. However, in the case of non-woven fabric and felt, it is also possible to increase the tensile strength of the interposition layer 4 in the longitudinal direction by substantially orienting the fibers F along the longitudinal direction.

As the fiber F, glass fiber, aramid fiber, carbon fiber, metal fiber (for example, iron fiber, stainless steel fiber) and the like can be used. Since these fibers F have high strength against tension, they are suitable when the interposition layer 4 is used as a tensile strength body (tension member).

The type of fiber F can be selected according to the characteristics required for the optical fiber cable 10.

For example, since glass fiber has an insulation characteristic, a configuration for grounding is not required. In addition, the unit price is cheaper than that of aramid fiber. In addition, since the amount of shrinkage of the glass fiber at low temperature is small, the shrinkage of the interposition layer 4 in a low-temperature environment can be reduced. Therefore, the stress generated in the optical fiber 1a due to the contraction of the interposition layer 4 can be reduced. On the other hand, glass fiber has a lower tensile strength than other materials (fibers).

Since the aramid fiber has an insulation characteristic, a configuration for grounding is not required. In addition, the strength against tension is higher than that of glass fiber. On the other hand, for example, when the sheath 5 tries to shrink in a low-temperature environment, the ability to suppress the shrinkage deformation is relatively low, and the optical fiber 1a is likely to be affected. In addition, the unit price is higher than that of glass fiber.

Since the carbon fiber has high strength against tension, it is more suitable when the interposition layer 4 is used as a tensile strength body. On the other hand, since the unit price is high and the interposition layer 4 has conductivity, a configuration for grounding the interposition layer 4 may be required.

Here, in the present embodiment, as shown in FIG. 2, the fiber F is integrated by the matrix M in the outer peripheral portion 4b of the interposition layer 4. On the other hand, in the inner peripheral portion 4a, the fibers F are not integrated by the matrix M, and a minute space is provided between the fibers F. In other words, the outer peripheral portion 4b is a cured portion in which the fiber F is integrated by the matrix M, and the inner peripheral portion 4a is an uncured portion in which the fiber F is not integrated by the matrix M. The inner peripheral portion 4a has a cushion characteristic by providing a minute space between the fibers F. If the required characteristics are satisfied, the size of the range in which the fibers F are integrated by the matrix M in the interposition layer 4 may vary in the circumferential direction and the longitudinal direction

As the matrix M provided on the outer peripheral portion 4b, a thermosetting resin such as an epoxy resin, a thermoplastic resin, an ultraviolet-curable resin, an elastomer (rubber), or the like can be used.

The tensile strength of the interposition layer 4 can be adjusted by changing, for example, the types of the fibers F and the matrix M, the density of the fibers F, the amount (thickness) of the matrix M, the cross-sectional area of the interposition layer 4, and the like.

In the conventional optical fiber cable, for example, a metal wire (steel wire or the like), an FRP rod, or the like is used as the tensile strength body, and these tensile strength bodies are embedded in a sheath covering the core. On the other hand, since the optical fiber cable 10 of the present embodiment shown in FIG. 1 uses the interposition layer 4 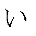 including the fiber F as the tensile strength body, the optical fiber cable 10 does not have a tensile strength body other than the plurality of interposition layers 4.

Thereby, even if the optical fiber cable 10 does not have a tensile strength body other than the interposition layer 4, the optical fiber 1a can be protected from tension when the optical fiber cable 10 is pulled in the longitudinal direction. In addition, since it is not necessary to arrange a tensile strength body other than the interposition layer 4, the weight and outer diameter of the optical fiber cable 10 can be kept small. In addition, in the cross-sectional view, since the interposition layer 4 serving as the tensile strength body is uniformly arranged over the entire circumference, the optical fiber cable 10 has no directional bendability and is easily bent in any direction. Therefore, the workability at the time of laying the optical fiber cable 10 can be improved. If necessary, a tensile strength body different from the interposition layer 4 may be provided at an appropriate position (for example, between the interposition layer 4 and the sheath 5 or inside the sheath 5).

In addition, for example, an optical fiber cable erected, laid, or buried in mountains and forests may be bitten by wild animals such as mice, squirrels, and foxes (bite damage), and the optical fiber inside the cable may be damaged. On the other hand, in the present embodiment, the fibers F are integrated by the matrix M in the outer peripheral portion 4b of the interposition layer 4, and have high strength. Therefore, even if the sheath 5 is broken, the interposition layer 4 can protect the optical fiber 1a from an external force.

In addition, the inner peripheral portion 4a of the interposition layer 4 has a cushion characteristic, and when an external force such as compressing in the radial direction acts on the optical fiber cable 10, the inner peripheral portion 4a is elastically deformed such that the space between the fibers F of the inner peripheral portion 4a shrinks. In such a manner, the interposition layer 4 can also function as a cushion layer against impact.

In addition, when water enters a vicinity of the core 8, it is possible to retain the water in the space between the fibers F in the inner peripheral portion 4a. That is, since the inner peripheral portion 4a of the interposition layer 4 has water absorption characteristic, it is possible to improve the waterproof performance of the optical fiber cable 10. In addition, the waterproof performance may be further enhanced by applying a water absorption characteristic agent to the inner peripheral portion 4a.

As described above, the optical fiber cable 10 of the present embodiment includes the core 8 including a plurality of optical fibers 1a, the sheath 5 housing the core 8, and the interposition layer 4 arranged between the core 8 and the sheath 5 and including the fibers F. The fibers F located from the outer end portion to the intermediate portion in the radial direction of the interposition layer 4 are integrated by the matrix M. With this configuration, it is possible to reduce the diameter, it is possible to protect the optical fiber 1a from biting damage and impact since there is no bending direction, and it is also possible to provide an excellent optical fiber cable 10 with improved waterproof performance.

As a method of manufacturing the optical fiber cable 10, a step of forming an interposition layer 4 including the fiber F around the core 8, a step of applying a matrix M before curing to the outer peripheral portion 4b of the interposition layer 4, a step of curing the matrix M, and a step of forming a sheath 5 covering the interposition layer 4 can be employed.

When applying the matrix M before curing to the outer peripheral portion 4b, for example, by using an extruder and appropriately controlling the temperature and the extrusion amount of the matrix M before curing, the matrix M can be filled to the desired range of the interposition layer 4. The specific steps for curing the matrix M differ depending on the type of the matrix M. For example, in the case of a thermosetting resin, it is heated, in the case of a photocurable resin, it is irradiated with light, and in the case of a thermoplastic resin, it is cooled (natural cooling is also possible). In addition, as the matrix M before curing, a resin (varnish) diluted with a solvent may be applied to the outer peripheral portion 4b of the interposition layer. In this case, the step of curing the matrix M includes a step of volatilizing the solvent.

The optical fiber cable 10 can be easily manufactured by the above-described manufacturing method. When forming the interposition layer 4 around the core 8, a sheet composed of fibers F may be wound around the core 8, or the core 8 may be inserted inside a cylindrical member composed of fibers F.

However, the optical fiber cable 10 may be manufactured by a manufacturing method different from the above.

### EXAMPLES

Hereinafter, the embodiment described above will be described with reference to specific examples. Note that the present invention is not limited to the following examples.

Two kinds of optical fiber cables shown in Table 1 below were prepared, and their performance, dimensions, and the like were compared.

**(Table 1)**

| | COMPARATIVE EXAMPLE | EXAMPLE |
|---|---|---|
| CROSS-SECTIONAL CONFIGURATION | FIG. 3 | FIG. 1 |
| OUTER DIAMETER [mm] | 17.5 | 12.2 |
| RATIO OF OUTER DIAMETER | 1.0 | 0.7 |
| WEIGHT [kg/km] | 260 | 130 |
| WEIGHT RATIO | 1.0 | 0.5 |

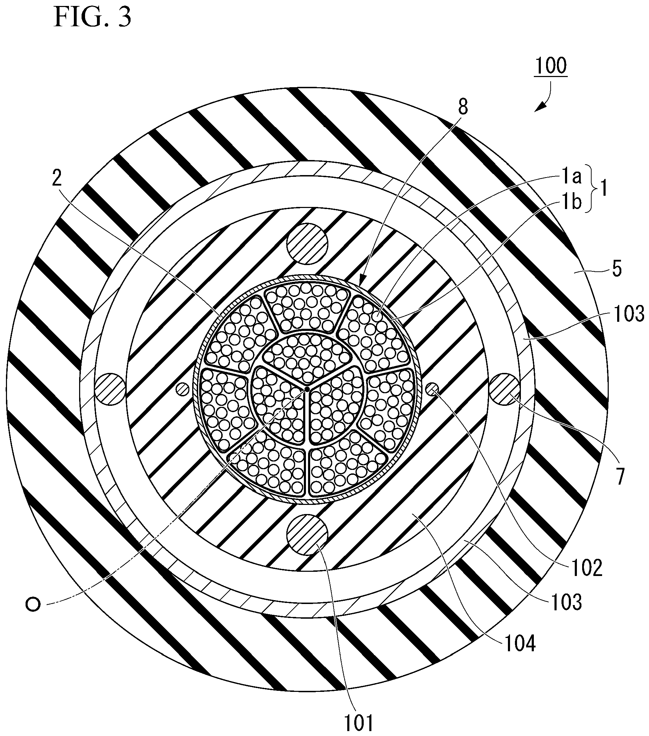

As shown in FIG. 3, the optical fiber cable 100 of Comparative Example includes the core 8, two tensile strength bodies 101, two inner ripcords 102, a metal reinforcement layer 103, an internal sheath 104, two ripcords 7, and the sheath 5. The inner sheath 104 covers the core 8, and the inner ripcord 102 and the tensile strength 101 are embedded in the inner sheath 104. The reinforcement layer 103 is provided between the inner sheath 104 and the sheath 5, and the ripcord 7 is located between the inner sheath 104 and the reinforcing layer 103. The optical fiber cable 100 of Comparative Example has a general structure conventionally used in order to protect the optical fiber 1a from being bitten and the like.

The optical fiber cable 10 of Example includes the structure shown in FIG. 1. In the optical fiber cables of Comparative Examples and Example, the structure of the core 8 is common and has 288 optical fibers 1a. In the optical fiber cable 10 of Example, an epoxy resin was used as the matrix M, and a glass fiber was used as the fiber F. The thickness of the glass fiber was 10 µm, and the density was 0.05 g/cm³. The thickness of the epoxy resin as the matrix M was 0.05 mm.

In the optical fiber cables of Comparative Examples and Example, when work was performed in which the sheath 5 was torn to take out the optical fiber 1a, both of them had the same protective performance without causing any damage to the optical fiber 1a.

On the other hand, as shown in Table 1, in the optical fiber cable 10 of Example, both the outer diameter and the weight could be significantly reduced as compared with Comparative Example. This is because the optical fiber cable 10 of Example does not include the tensile strength body 101, the internal sheath 104, the metal reinforcement layer 103, and the like. As described above, it was confirmed that the optical fiber cable 10 can maintain low weight and a small outer diameter while having the same performance as the conventional optical fiber cable.

In addition, in the optical fiber cable 10 of the embodiment, the outer peripheral portion 4b of the interposition layer 4 integrated by the matrix M was scratched by using a general-purpose pipe cutter, and a crack was generated from the scratched portion as a starting point by bending the interposition layer 4, and the core 8 could be easily taken out. On the other hand, in the optical fiber cable of the Comparative Example, in order to take out the core 8, the metal reinforcement layer 103 was partially incised to take out a portion of the inner ripcord 102, and the inner ripcord 102 needed to be pulled with a strong force to tear the reinforcing layer 103. As described above, it was possible to confirm the superiority of the optical fiber cable 10 of the Example as compared with the Comparative Example from the viewpoint of ease of disassembly.

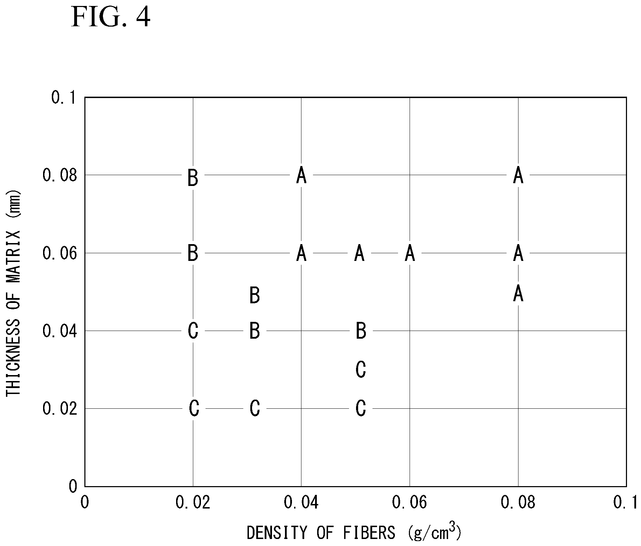

Next, with reference to FIG. 4, the results of experiments on the preferable numerical ranges of the radial thickness of the matrix M and the density of the fibers F will be described. Similar to the above-described embodiment, glass fiber was used as the fiber F, and an epoxy resin was used as the matrix M. The minimum thickness of the matrix M (epoxy resin) in the radial direction was varied in the range of 0.02 to 0.08 mm. The density of the fiber F was varied in the range of 0.02 to 0.08 g/cm³. Under each condition, a mechanical test (tensile test, lateral pressure test, and impact test) according to Telcordia GR-20 was performed, and when the optical fiber 1a could be taken out without any problem after the test, the result was regarded as favorable (A) and when the optical fiber 1a was broken, the result was regarded as defective (C). When the optical fiber 1a was not broken but the work took time, the result was regarded as (B).

As shown in FIG. 4, the favorable result (A) was obtained when the density of the fiber F was 0.04 g/cm³ or more and 0.08 g/cm³ or less, and the minimum thickness of the matrix M in the radial direction was 0.05 mm or more and 0.08 mm or less. As the density of the fiber F and the thickness of the matrix M increased, the mechanical strength of the interposition layer 4 improved. Therefore, also in the case of the density of the fiber F being 0.08 g/cm³ or more, or the minimum thickness of the matrix M being 0.08 mm or more, it is considered that the same result can be obtained. That is, if the density of the fiber F is 0.04 g/cm³ or more and the minimum thickness of the matrix M in the radial direction is 0.05 mm or more, it is considered that the effect can be obtained.

In addition, the above is the result when the glass fiber and the epoxy resin are used; however, the mechanical strength of the interposition layer 4 is roughly determined by the density of the fiber F and the thickness of the matrix M. Therefore, even when other types of fibers F and matrix M are used, it is considered that the same effect can be obtained by employing the same numerical range as described above.

The technical scope of the present invention is not limited to the above-described embodiment, and various modifications can be made without departing from the spirit of the present invention.

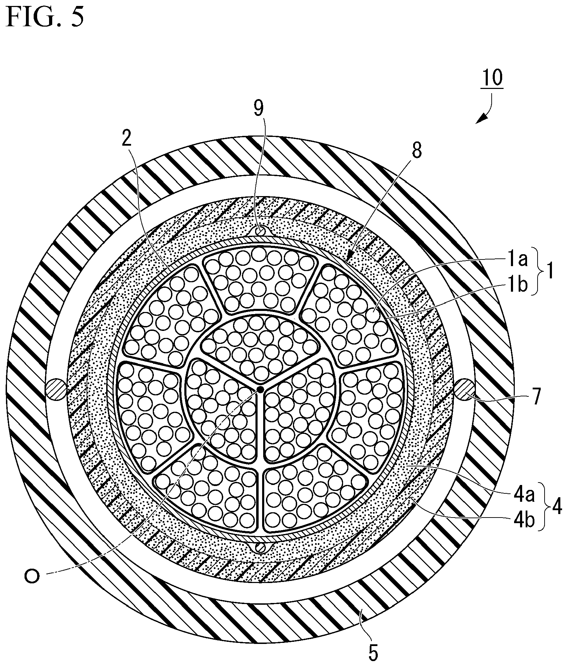

For example, the optical fiber cable 10 may have a structure for easily tearing the interposition layer 4. In particular, as shown in FIG. 5, an inner ripcord 9 for tearing the interposition layer 4 may be provided between the interposition layer 4 and the core 8. Alternatively, the inner ripcord 9 may be embedded in the inner peripheral portion 4a of the interposition layer 4. In the example of FIG. 5, the number of the inner ripcords 9 is two; however, it may be one or three or more.

In addition, it is possible to appropriately replace the components in the above-described embodiment with well-known components without departing from the spirit of the present invention, and the above-described embodiments and modifications may be appropriately combined.

### DESCRIPTION OF THE REFERENCE SYMBOLS

1ah: Optical fiber, 4: Interposition layer, 4a: Inner circumference, 4b: Outer circumference, 5: Sheath, 8: Core, F: Fiber, M: Matrix

## Claims

1. An optical fiber cable, comprising:
a core comprising a plurality of optical fibers;
a sheath housing the core; and
an interposition layer comprising fibers arranged between the core and the sheath,
wherein the fibers which are arranged from an outer end portion to an intermediate portion in a radial direction of the interposition layer are integrated by a matrix.

2. The optical fiber cable according to Claim 1, wherein:
a density of the fibers included in the interposition layer is 0.04 g/cm³ or more; and
a minimum thickness in a radial direction of the matrix is 0.05 mm or more.

3. A method of manufacturing an optical fiber cable, comprising:
forming an interposition layer comprising fibers around a core comprising a plurality of optical fibers;
applying a matrix before curing to an outer peripheral portion of the interposition layer;
curing the matrix; and
forming a sheath covering the interposition layer.
